# EUROPÄISCHE PATENTSCHRIFT

(11) **EP 3 039 764 B1**
(45) Veröffentlichungstag und Bekanntmachung des Hinweises auf die Patenterteilung: **27.11.2019**
(21) Anmeldenummer: 13779530.8
(22) Anmeldetag: 07.10.2013
(51) Int. Cl.: H02J 3/36, H02M 7/06, H02J 3/34, H02J 3/38, H02M 7/483

(54) **ANLAGE ZUM ÜBERTRAGEN ELEKTRISCHER LEISTUNG**
SYSTEM FOR TRANSMITTING ELECTRICAL POWER
INSTALLATION PERMETTANT LE TRANSFERT D'UNE PUISSANCE ÉLECTRIQUE

(43) Veröffentlichungstag der Anmeldung: 06.07.2016
(73) Patentinhaber: Siemens Aktiengesellschaft, 80333 München (DE)
(72) Erfinder: HUANG, Hartmut, 91056 Erlangen (DE); MENKE, Peter, 96237 Oberfüllbach (DE); SPRINGER, Karlheinz, 76706 Dettenheim (DE); WEINHOLD, Michael, 90425 Nürnberg (DE)
(86) Internationale Anmeldenummer: PCT/EP2013/070808
(87) Internationale Veröffentlichungsnummer: WO 2015/051817

(56) Entgegenhaltungen:
- EP-A2- 1 022 838
- WO-A1-2005/096467
- LEONHARD W: "Electrical engineering between energy and information", POWER ELECTRONICS AND MOTION CONTROL CONFERENCE, 2000. PROCEEDINGS. PI EMC 2000. THE THIRD INTERNATIONAL AUGUST 15-18, 2000, PISCATAWAY, NJ, USA,IEEE, Bd. 1, 15. August 2000 (2000-08-15), Seiten 197-202, XP010522842, ISBN: 978-7-80003-464-0
- BERNAL-PEREZ S ET AL: "Off-shore wind farm grid connection using a novel diode-rectifier and VSC-inverter based HVDC transmission link", IECON 2011 - 37TH ANNUAL CONFERENCE ON IEEE INDUSTRIAL ELECTRONICS SOCIETY, IEEE, 7. November 2011 (2011-11-07), Seiten 3186-3191, XP032104974, DOI: 10.1109/IECON.2011.6119820 ISBN: 978-1-61284-969-0 in der Anmeldung erwähnt

## Beschreibung

Die Erfindung betrifft eine Anlage zum Übertragen elektrischer Leistung zwischen einem ersten und einem zweiten Wechselspannungsnetz. An das zweite Wechselspannungsnetz ist ein selbstgeführter Umrichter anschließbar, der über eine Gleichspannungsverbindung mit einem ungeregelten Gleichrichter verbunden ist. Der ungeregelte Gleichrichter ist wechselspannungsseitig mit dem ersten Wechselspannungsnetz verbindbar.

Ferner betrifft die Erfindung ein Verfahren zur Stabilisierung einer Netzfrequenz des ersten Wechselspannungsnetzes der Anlage zum Übertragen elektrischer Leistung.

Anlagen der obigen Art sind aus dem Stand der Technik bekannt. Beispielsweise wird in dem Artikel von S. Bernal-Perez et al., "Off-shore Wind Farm Grid Connection using a Novel Diode-Rectifier and VSC-Inverter based HVDC Transmission Link", IECON, 2011, Seiten 3186-3191, eine Energieübertragungsanlage für den Einsatz in Windenergieanlagen offenbart. Die Energieübertragungsanlage umfasst einen als Diodengleichrichter ausgebildeten ungeregelten Umrichter, der gleichspannungsseitig mit einem Gleichspannungszwischenkreis verbunden ist. Der Gleichspannungszwischenkreis erstreckt sich zwischen dem Diodengleichrichter und einem spannungseinprägenden Umrichter, der im Englischen auch als "Voltage Source Converter (VSC)" bezeichnet wird. Der ungeregelte Gleichrichter ist über Transformatoren und ein Wechselspannungsnetz mit einem Windpark der Windenergieanlage verbunden. Zum Zwecke der Blindleistungskompensation sind passive Filterelemente mit dem Wechselspannungsnetz des Windparks verbunden.

Die Übertragung von elektrischer Energie mit Hilfe von Gleichstrom ist bei vielen Anwendungen, insbesondere bei Übertragungsstrecken von mehreren Hundert Kilometern Länge, ökonomisch vorteilhaft.
Zu diesen Anwendungen zählen beispielsweise die bereits erwähnte Anbindung von im Meer aufgestellten Windparks an ein landseitiges Versorgungsnetz, die Energieversorgung von offshore-Einrichtungen (beispielsweise Ölplattformen) von Land aus oder die Verbindung von zwei durch ein Meer getrennten Festlandnetzen.

Bei Gleichstromübertragungseinrichtungen werden oft zwei selbstgeführte Umrichter eigesetzt, die mittels einer Gleichspannungsverbindung miteinander verbunden sind. Eine solche Anordnung erlaubt einen bidirektionalen Leistungsfluss auch zwischen schwachen Wechselspannungsnetzen, so dass beispielsweise eine Stabilisierung eines schwachen Wechselspannungsnetzes durch ein starkes Wechselspannungsnetz erreicht werden kann.

Selbstgeführte Umrichter ermöglichen auch das "Hochfahren" von Wechselspannungsnetzen ("Black Start"). Zum Anfahren des Windparks zum Beispiel wird durch den seeseitigen Umrichter ein Wechselspannungsnetz erzeugt, wobei die dafür notwendige Versorgungsenergie dem landseitigen Energieversorgungsnetz entnommen werden kann. Die Windenergieanlagen des Windparks können sich daher auf das bestehende Wechselspannungsnetz aufsynchronisieren. Bei stärkeren Winden erfolgt die gewünschte Leistungsflussumkehr, nämlich die Leistungsübertragung von dem Windpark zum landseitigen Energieversorgungsnetz. Derzeit werden als Umrichter spannungseinprägende und selbstgeführte Umrichter (VSCs) und insbesondere Mehrstufenumrichter eingesetzt. Das Aufstellen solcher Umrichter im Meer ist jedoch aufgrund des immer noch hohen Gewichts der Umrichter kostenintensiv.

Die Verwendung eines ungeregelten Gleichrichters erlaubt den Leistungstransport zwar nur in eine Richtung, weist jedoch den Vorteil auf, dass Verluste und das Gewicht des Gleichrichters im Vergleich mit einem selbstgeführten Umrichter deutlich herabgesetzt sind. Darüber hinaus sind im ungeregelten Gleichrichter verhältnismäßig kompakte Leistungshalbleiter einsetzbar. Auch die Steuerung und Kühlung des ungeregelten Gleichrichters kann unter Umständen weniger aufwändig gestaltet werden.

Ist das erste Wechselspannungsnetz beispielsweise an eine Energieerzeugungsanlage, wie einen Windpark, angebunden, dann ist die Richtung des Leistungstransports im Wesentlichen vorgegeben, so dass die Einschränkung auf unidirektionale Energieübertragung keinen gravierenden Nachteil darstellt.

Nachteil dieses Konzeptes ist es jedoch, dass der ungeregelte Gleichrichter keine Wechselspannung im ersten Wechselspannungsnetz bereitstellen kann. Für den Betrieb der Anlage mit kommerziell üblichen Windturbinen wird jedoch das Vorhandensein einer frequenzstabilen Wechselspannung in dem mit dem Windpark verbundenen Wechselspannungsnetz vorausgesetzt. Diese benötigte Wechselspannung kann mittels eines ungeregelten Gleichrichters nicht bereitgestellt werden. Zudem können Schwankungen der Netzfrequenz im ersten Wechselspannungsnetz nur unzureichend geregelt werden.

Eine Möglichkeit, dieses Problem zu überwinden, ist der Einsatz eines speziell angepassten Windturbinenregelkonzeptes In einem solchen Fall wären jedoch die kommerziell verfügbaren Windturbinen nicht mehr einsetzbar. Daher besteht weiterhin Bedarf nach Anlagen der obigen Art, die ein stabiles erstes Wechselspannungsnetz aufweisen.

Aus der WO 2005/096467 A1 ist eine elektrische Anlage zur Stabilisierung eines Stromversorgungsnetzes bekannt. Bei der bekannten Anlage ist eine Parallelschaltung aus einem rotierenden Massenspeicher und einer Windenergieanlage wahlweise über einen AC-DC-Umrichter oder eine Gleichrichterbrücke mit einem Gleichspannungsstrang oder direkt mit dem Stromversorgungsnetz verbindbar. Mittels der bekannten Anlage ist es möglich, wahlweise Wirkleistung oder Blindleistung aus dem rotierenden Massenspeicher in das Stromversorgungsnetz einzuspeisen oder Wirkleistung aus dem Gleichspannungsstrang auszutauschen.

Ausgehend vom Stand der Technik besteht die Aufgabe der Erfindung darin, eine Anlage der eingangs genannten Art vorzuschlagen, die einen stabilen Betrieb des ersten Wechselspannungsnetzes ermöglicht.

Diese Aufgabe wird durch eine Anlage gelöst, die eine mit dem ersten Wechselspannungsnetz verbindbare Netzerzeugungsvorrichtung aufweist. Die Netzerzeugungsvorrichtung ist zur Erzeugung einer Wechselspannung im ersten Wechselspannungsnetz vorgesehen, wobei sie zum Austausch von Blindleistung und Wirkleistung mit dem ersten Wechselspannungsnetz eingerichtet ist, wobei der selbstgeführte Umrichter dazu eingerichtet ist, durch Änderung einer Spannung an dessen Gleichspannungsanschluss die Netzfrequenz im ersten Wechselspannungsnetz zu regeln.

Ferner besteht die Aufgabe der Erfindung darin, ein Verfahren zur Stabilisierung einer Netzfrequenz des ersten Wechselspannungsnetzes vorzuschlagen.

Die Aufgabe wird durch ein Verfahren gelöst, bei dem die Netzfrequenz im ersten Wechselspannungsnetz durch eine Änderung einer Spannung am Gleichspannungsanschluss des selbstgeführten Umrichters geregelt wird.

Die Netzerzeugungsvorrichtung erzeugt erfindungsgemäß eine Wechselspannung im ersten Wechselspannungsnetz. Darüber hinaus ist die Netzerzeugungsvorrichtung dazu vorgesehen, Blindleistung mit dem ersten Wechselspannungsnetz auszutauschen. Ist beispielsweise eine Energieerzeugungseinrichtung, wie ein Windpark mit kommerziell üblichen Windturbinen, an das erste Wechselspannungsnetz angeschlossen, so kann die zu deren Betrieb notwendige Wechselspannung im ersten Wechselspannungsnetz sowie die gegebenenfalls erforderliche Blindleistung durch die Netzerzeugungsvorrichtung bereitgestellt werden. Die Steuerung der Aufnahme oder Einspeisung der geforderten Wirkleistung und Blindleistung durch die Netzerzeugungsvorrichtung erfolgt vorzugsweise durch eine dazu vorgesehene Steuereinheit der Netzerzeugungsvorrichtung.

Mittels des erfindungsgemäßen Verfahrens kann die Frequenzstabilität der Wechselspannung im ersten Wechselspannungsnetz aufrechterhalten werden. Wird beispielsweise mehr Wirkleistung in das erste Wechselspannungsnetz eingespeist, so kann dies zu Schwankungen der Netzfrequenz im ersten Wechselspannungsnetz führen. Um beispielsweise einer Erhöhung der Netzfrequenz entgegen zu wirken, wird die Spannung am Gleichspannungsanschluss des selbstgeführten Umrichters gesenkt. Dies bewirkt einen erhöhten Leistungsfluss vom ersten in das zweite Wechselspannungsnetz. Auf diese Weise kann die Netzfrequenz im ersten Wechselspannungsnetz auf einen vorbestimmten Wert geregelt werden. Bei einer Senkung der Netzfrequenz kann entsprechend verfahren werden, indem die Spannung am Gleichspannungsanschluss des selbstgeführten Umrichters angehoben wird, wodurch der Leistungsfluss vom ersten in das zweite Wechselspannungsnetz gesenkt wird.

Vorzugsweise ist der ungeregelte Gleichrichter ein Diodengleichrichter. Diodengleichrichter erweisen sich in der Praxis als besonders kompakt und günstig in Herstellung und Betrieb.

Die erfindungsgemäße Anlage ist besonders geeignet für Anwendungen, bei denen die in offshore-Windkraftanlagen erzeugte elektrische Energie in ein an Land angeordnetes Energieversorgungsnetz übertragen werden muss. Der ungeregelte Gleichrichter kann dabei beispielsweise über das erste Wechselspannungsnetz mit einem in einem Meer oder einer See angeordneten Windpark verbunden sein. Da die Energieübertragung an Land in diesem Fall über eine Gleichspannungsverbindung erfolgt, ist der ungeregelte Gleichrichter bevorzugt auf einer Hochseeplattform angeordnet. Entsprechend ist der selbstgeführte Umrichter an Land angeordnet.

Die für das Anfahren der Windturbinen benötigte Wechselspannung im ersten Wechselspannungsnetz wird durch die Netzerzeugungsvorrichtung bereitgestellt. Die Netzerzeugungsvorrichtung kann dazu beispielsweise einen rotierenden Phasenschieber, beispielsweise in Form eines Synchronmotors, umfassen. Der Phasenschieber kann Wirkleisung aus dem ersten Wechselspannungsnetz aufnehmen und in Form von Rotationsenergie zwischenspeichern. Dazu weist der Phasenschieber eine rotierende Masse auf, beispielsweise in Form eines massiven Rotors. Der Phasenschieber kann entsprechend Wirkleisung in das erste Wechselspannungsnetz einspeisen, wobei die über die Zeit abgegebene Wirkleistung der gespeicherten Rotationsenergie entnommen wird.

In diesem Fall beeinflusst die in dem Phasenschieber zu einer gegebenen Zeit gespeicherte Rotationsenergie die Netzfrequenz des ersten Wechselspannungsnetzes. Nimmt der Phasenschieber Energie auf, so erhöht sich die Drehgeschwindigkeit der rotierenden Masse, wobei die Netzfrequenz des ersten Wechselspannungsnetzes mit der Drehgeschwindigkeit korreliert ist. Um eine Änderung der Netzfrequenz auszugleichen, kann eine Spannung am Gleichspannungsanschluss des selbstgeführten Umrichters erhöht oder abgesenkt werden. Auf diese Weise kann der Leistungsfluss zwischen dem ungeregelten Gleichrichter und dem selbstgeführten Umrichter geregelt werden: bei Erhöhung der Netzfrequenz im ersten Wechselspannungsnetz wird die Spannung am Gleichspannungsanschluss des selbstgeführten Umrichters gesenkt, so dass dem ersten Wechselspannungsnetz mehr Wirkleistung abgenommen wird, wodurch die Netzfrequenz sinkt; dementsprechend wird die Spannung am Gleichspannungsanschluss des selbstgeführten Umrichters erhöht, wenn die Netzfrequenz im ersten Wechselspannungsnetz sinkt.

Erfindungsgemäß umfasst die Netzerzeugungsvorrichtung eine Static-Synchronous-Compensator (STATCOM)-Anlage. Die STATCOM-Anlage verfügt über einen Wechselspannungsanschluss, über den die STATCOM-Anlage beispielsweise an die drei Phasen des Wechselspannungsnetzes angeschlossen werden kann. Mittels der STATCOM-Anlage kann induktive und/oder kapazitive Blindleistung zwischen der STATCOM-Anlage und dem Wechselspannungsnetz ausgetauscht werden. Geeigneterweise ist die STATCOM-Anlage dazu eingerichtet, Blindleistung zu generieren, die nicht von der Spannung des Wechselspannungsnetzes abhängt. Die STATCOM-Anlage kann zum Beispiel als ein so genannter Voltage Source Converter ausgebildet sein, der über eine Induktivität mit dem ersten Wechselspannungsnetz verbunden ist. Als Induktivität kommt grundsätzlich jedes induktive Bauteil wie beispielsweise eine Spule oder ein Transformator in Betracht. Erfindungsgemäß ist die STATCOM-Anlage als ein modularer Mehrstufenumrichter (Multilevel Converter) mit verteilten Speicherkondensatoren ausgebildet. Die STATCOM-Anlage umfasst in diesem Fall Phasenmodule, deren Anzahl der Anzahl der Phasen des ersten Wechselspannungsnetzes entspricht, wobei die Phasenmodule beispielsweise in einer Sternschaltung oder einer Dreieckschaltung miteinander geschaltet sind. Dabei ist jedes Phasenmodul als eine Reihenschaltung aus zweipoligen Submodulen ausgebildet. Jedes Submodul ist mit einem Energiespeicher, wie beispielsweise einem unipolaren Kondensator, sowie einer dazu parallel angeordneten Leistungshalbleiterschaltung ausgerüstet. Die Leistungshalbleiterschaltung kann zum Beispiel als Halb- oder Vollbrückenschaltung ausgebildet sein. Die Netzerzeugungsvorrichtung umfasst in diesem Fall ferner ein Energiespeicherelement zur Bereitstellung einer gegebenenfalls erforderlichen Wirkleistung, beispielsweise in Form einer wiederaufladbaren Batterie. Das Energiespeicherelement kann beispielsweise parallel zu einem Zwischenkreiskondensator des Gleichspannung einprägenden Umrichters geschaltet sein. Das Energiespeicherelement kann im Allgemeinen nur eine begrenzte Energiemenge aufnehmen und/oder abgeben. Aus diesem Grund wird zur Frequenzstabilisierung der Netzfrequenz im ersten Wechselspannungsnetz der Leistungsfluss zwischen dem ersten und dem zweiten Wechselspannungsnetz durch die Anpassung der Spannung am Gleichspannungsanschluss des selbstgeführten Umrichters geregelt.

Denkbar ist es ebenfalls, die Netzerzeugungsvorrichtung mit einem geeignet eingerichteten, dem Fachmann bereits bekannten Schwungrad auszustatten. Das Schwungrad kann, ähnlich dem rotierenden Phasenschieber, Wirkleistung als Rotationsenergie zwischenspeichern und/oder abgeben.

Die Netzerzeugungsvorrichtung kann darüber hinaus wenigstens ein Schalterelement aufweisen, wobei das Energiespeicherelement mittels des Schalterelements von den übrigen Teilen der Netzerzeugungsvorrichtung getrennt werden kann.

Die Netzerzeugungsvorrichtung kann an jedem geeigneten Ort in der Nähe des ersten Wechselspannungsnetzes angeordnet sein. Bei einer Windparkanwendung kann beispielsweise die Netzerzeugungsvorrichtung gemeinsam mit dem ungeregelten Gleichrichter auf einer im Meer aufgeständerte Hochseeplattform angeordnet sein, wobei die Netzerzeugungsvorrichtung und der Gleichrichter auch auf zwei oder mehr voneinander räumlich getrennten Plattformen angeordnet sein können. Denkbar ist in diesem Fall auch, die Netzerzeugungsvorrichtung an einer der Säulen der Windkraftanlagen anzubringen.

In manchen Anwendungen kann es zweckmäßig sein, wenn die Anlage mit einer Hilfsenergieversorgungseinheit zur hilfsweisen Bereitstellung von Energie für die Netzerzeugungsvorrichtung, beispielsweise zur Ladung des Energiespeicherelementes, ausgestattet ist. Bei Windparkanwendungen kann die Hilfsenergieversorgungseinheit die Netzerzeugungsvorrichtung während Schwachwindphasen mit Energie versorgen. Die Energiebereitstellung erfolgt zum Beispiel über einen Hilfsgenerator, beispielsweise einen Dieselgenerator. Sie kann aber auch von Land über die bestehende Gleichspannungsverbindung und einen zusätzlichen selbstgeführten Wechselrichter mit deutlich kleinerer Spannung erfolgen, wobei der zusätzliche Wechselrichter von der Übertragungsstrecke mittels Schalter abtrennbar ist. Alternativ kann die Energiebereitstellung auch von Land über eine eigens dafür vorgesehene Gleichstromübertragungsstrecke und den zusätzlichen Wechselrichter erfolgen. Denkbar ist ferner eine Energiebereitstellung von Land über die Gleichspannungsverbindung und über in den ungeregelten Gleichrichter integrierte schaltbare Bauelemente oder auch über eine zusätzliche Wechselspannungsleitung, wie zum Beispiel ein paralleles Kabel an Land oder na einen weiteren Windpark.

Der selbstgeführte Umrichter kann geeigneterweise ein modularer Mehrstufenumrichter sein. Der modulare Mehrstufenumrichter weist Phasenmodule auf, deren Anzahl der Anzahl der Phasen des angeschlossenen zweiten Wechselspannungsnetzes entspricht. Dabei ist jedes Phasenmodul als Dreipol ausgebildet und weist zwei äußere Gleichspannungsanschlüsse und einen mittleren Wechselspannungsanschluss auf. Zwischen dem Wechselspannungsanschluss und jedem Gleichspannungsanschluss erstreckt sich ein Phasenmodulzweig, der eine Reihenschaltung aus zweipoligen Submodulen aufweist. Jedes Submodul ist mit einem Energiespeicher, wie beispielsweise einem unipolaren Kondensator, sowie einer dazu parallel angeordneten Leistungshalbleiterschaltung ausgerüstet. Die Leistungshalbleiterschaltung kann zum Beispiel als Halb- oder Vollbrückenschaltung ausgebildet sein. Bei der Halbbrückenschaltung ist eine Reihenschaltung von zwei ein- und abschaltbaren Leistungshalbleiterschaltern, wie beispielsweise IGBTs, IGCTs oder dergleichen, bereitgestellt, wobei jedem ein- und abschaltbaren Leistungshalbleiterschalter eine Freilaufdiode gegensinnig parallel geschaltet ist. Dabei ist eine erste Submodulanschlussklemme direkt mit einem Pol des Energiespeichers verbunden, während die andere Submodulanschlussklemme mit dem Potenzialpunkt zwischen den ein- und abschaltbaren Leistungshalbleiterschaltern verbunden ist. Bei einer Vollbrückenschaltung sind zwei Reihenschaltungen aus jeweils zwei ein- und abschaltbaren Leistungshalbleiterschaltern vorgesehen, wobei eine Submodulanschlussklemme mit dem Potenzialpunkt zwischen den ein- und abschaltbaren Leistungshalbleiterschaltern der ersten Reihenschaltung und die zweite Submodulanschlussklemme mit dem Potenzialpunkt zwischen den ein- und abschaltbaren Leistungshalbleiterschaltern der zweiten Reihenschaltung verbunden ist.

Gemäß einer Ausführungsform der Erfindung ist der ungeregelte Gleichrichter passiv gekühlt, beispielsweise über eine Luftkühlung, wobei die Kühlluft über geeignete Luftkanäle den zu kühlenden Teilen zugeführt werden kann. Bei Windparkanwendungen ist die verfügbare Kühlleistung gut mit der Verlustleistung, also der Menge der im Gleichrichter erzeugten Wärme, korreliert.

Zweckmäßigerweise ist der ungeregelte Gleichrichter über wenigstens einen Transformator mit dem seeseitigen Wechselspannungsnetz verbunden. Der Transformator ist in der Regel erforderlich, da der ungeregelte Gleichrichter ein fest vorgegebenes Übersetzungsverhältnis zwischen der anliegenden Gleich- und Wechselspannung vorgibt. Darüber hinaus ist es zweckmäßig, in der Gleichspannungsverbindung in unmittelbarer Nachbarschaft zum ungeregelten Gleichrichter eine Gleichspannungsglättungsdrossel anzuordnen. Die Glättungsdrossel kann dazu verwendet werden, eine Restwelligkeit der am Gleichspannungsausgang des ungeregelten Gleichrichters erzeugten Gleichspannung zu reduzieren.

Vorzugsweise umfasst die Anlage eine Meßvorrichtung, die die Netzfrequenz im ersten Wechselspannungsnetz erfasst. Eine Recheneinheit kann dann beispielsweise aus der kontinuierlich oder in zeitlichen Abständen erfassten Netzfrequenz die Frequenzänderungen ermitteln. Denkbar ist auch eine direkte Messerfassung von Netzfrequenzänderungen im ersten Wechselspannungsnetz. Ferner ist geeigneterweise eine Steuervorrichtung vorgesehen, die die erfasste Netzfrequenz bzw. erfasste oder ermittelte Netzfrequenzänderung in Steuersignale zur Regelung der Spannung am Gleichspannungsanschluss des selbstgeführten Umrichters umsetzt.

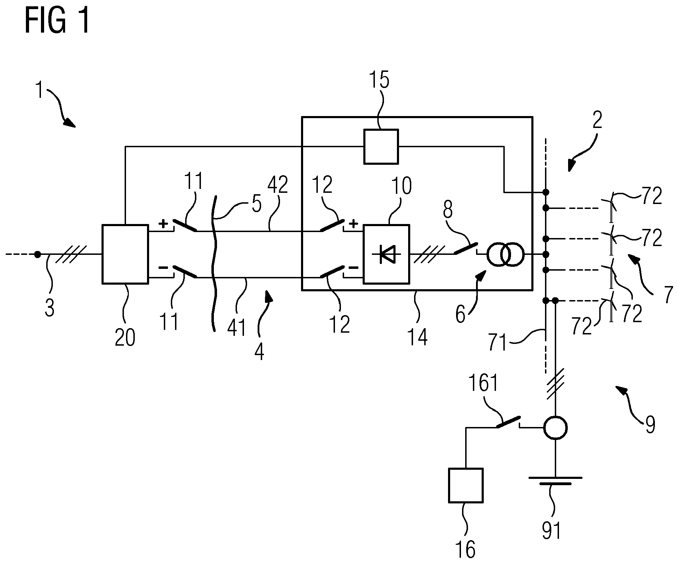

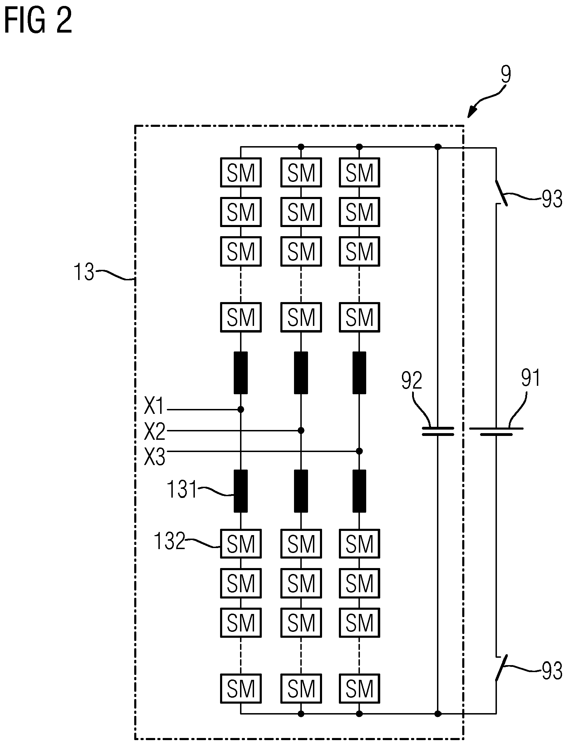

Die Erfindung wird im Folgenden anhand eines in den Figuren 1 und 2 dargestellten Ausführungsbeispiels der erfindungsgemäßen Anlage näher erläutert.
- Figur 1: zeigt ein Ausführungsbeispiel einer erfindungsgemäßen Anlage zur Energieübertragung;
- Figur 2: zeigt ein Ausführungsbeispiel einer Netzerzeugungsvorrichtung der erfindungsgemäßen Anlage aus Figur 1.

Figur 1 zeigt ein Ausführungsbeispiel der erfindungsgemäßen Anlage 1 zum Übertragen elektrischer Leistung in schematischer Darstellung. Die Anlage 1 umfasst ein erstes, seeseitiges Wechselspannungsnetz 2, das an einen Windpark 7 gekoppelt ist, der in einem Meer oder einer See angeordnet ist. Der Windpark 7 umfasst mehrere Windkraftanlagen 72, die dazu vorgesehen sind, Windenergie in elektrische Energie umzuwandeln. Das seeseitige Wechselspannungsnetz 2 ist dreiphasig ausgebildet.

Ein Diodengleichrichter 10 ist wechselspannungsseitig mit dem seeseitigen Wechselspannungsnetz 2 verbunden. Der Diodengleichrichter 10 kann eine dem Fachmann bekannte sogenannte Sechspulsbrücke oder aber eine dem Fachmann ebenfalls bekannte Zwölfpulsbrücke ausbilden.

Der Diodengleichrichter 10 ist gleichspannungsseitig an eine Gleichspannungsverbindung 4 angeschlossen, wobei die Gleichspannungsverbindung 4 Gleichspannungsleitungen 41 und 42 umfasst, die entgegengesetzt polarisiert sind. Die Gleichspannungsverbindung 4 ist von dem seeseitig angeordneten Diodengleichrichter 10 ans Land geführt, wobei die Länge der Gleichspannungsverbindung 4 zwischen 30 km und hundert Kilometern variieren kann. Das Meeresufer ist in Figur 1 durch die Uferlinie 5 angedeutet.

Ein selbstgeführter Umrichter 20 ist an Land angeordnet und gleichspannungsseitig an die Gleichspannungsverbindung 4 angeschlossen. Wechselspannungsseitig ist der selbstgeführte Umrichter 20 mit einem zweiten, landseitigen Wechselspannungsnetz 3 verbunden. Das landseitige Wechselspannungsnetz 3 ist im gezeigten Beispiel ein Energieversorgungsnetz, an das eine Vielzahl von Verbrauchern angeschlossen ist. Die Gleichspannungsleitungen 41 und 42 weisen jeweils zwei Gleichspannungsschalter 11 und 12 auf, die dazu vorgesehen sind, die Gleichspannungsleitungen 41 und 42 zu unterbrechen. Die Gleichspannungsschalter sind beispielsweise mechanische Trennschalter. In dem seeseitigen Wechselspannungsnetz 3 ist des Weiteren ein Schalter 8 vorgesehen, der dazu dienen kann, das Wechselspannungsnetz 3 vom Diodengleichrichter 10 zu trennen. Hierbei handelt es sich beispielsweise um einen Leistungsschalter.

Der Diodengleichrichter 10 ist auf einer Hochseeplattform 14 angeordnet, die auf dem Meeresboden aufgeständert ist.

Das seeseitige Wechselspannungsnetz 2 umfasst ferner einen Transformator 6, dessen Primärwicklung mit dem Wechselspannungsanschluss des Diodengleichrichters 10 verbunden ist und dessen Sekundärwicklung mit einer Sammelschiene 71 verbunden ist, wobei die Windkraftanlagen 72 ebenfalls mit der Schiene 71 verbunden sind.

In der Anlage 1 ist lediglich eine unidirektionale Energieübertragung vom Windpark 7 zum zweiten Wechselspannungsnetz 3 möglich. Insbesondere in Schwachwindphasen kann es jedoch vorkommen, dass der Windpark 7 selbst mit Energie versorgt werden muss. Sobald der Windpark 7 Energie benötigt, beispielsweise zum Ausrichten der Windenergieanlagen, der Rotorblätter oder zum Bereitstellen oder Stabilisieren des ersten Wechselspannungsnetzes 2, wird die hierzu erforderliche Leistung durch Netzerzeugungsvorrichtung 9 bereitgestellt werden.

Die Netzerzeugungsvorrichtung 9 ist wechselspannungsseitig mit dem Wechselspannungsnetz 2 verbunden. Die Netzerzeugungsvorrichtung 9 kann entweder direkt, über ein nicht in Figur 1 figürlich dargestellten Transformator oder auch über eine Tertiärwicklung des Transformators 6 an das Wechselspannungsnetz 3 angeschlossen sein. Die Netzerzeugungsvorrichtung 9 umfasst einen so genannten Voltage Source Converter 13, auf dessen inneren Aufbau in Figur 2 näher eingegangen wird.

Die Netzerzeugungsvorrichtung 9 umfasst ferner ein wiederaufladbares Energiespeicherelement 91 in Form einer Lithiumionenbatterie. Mit Hilfe der Netzerzeugungsvorrichtung 9 können Blindleistung und/oder Wirkleistung in das Wechselspannungsnetz 3 eingespeist oder dem Wechselspannungsnetz 3 entnommen werden.

Eine Hilfsenergieversorgungseinheit 16, die über einen Schalter 161 mit der Netzerzeugungsvorrichtung 9 verbunden ist, kann die Batterie in Schwachwindphasen hilfsweise mit Energie versorgen. Dadurch können beispielsweise durch Aufrechterhaltung einer Heizung in der Netzerzeugungsvorrichtung Feuchtigkeitsschäden an der Anlage minimiert werden.

Eine Meßvorrichtung 15 ist dazu eingerichtet, die Netzfrequenz im ersten Wechselspannungsnetz 2 fortdauernd oder in einer zeitlichen Abfolge zu erfassen. Eine Recheneinheit kann aus der Netzfrequenz zeitliche Änderungen der Netzfrequenz zu ermitteln. Die Änderungen der Netzfrequenz werden einer Steuervorrichtung des selbstgeführten Umrichters 20 zugeführt. Die Steuervorrichtung setzt die Netzfrequenzänderungen in Steuersignale zur Regelung der Spannung am Gleichspannungsanschluss des selbstgeführten Umrichters 20. Auf diese Weise kann beispielsweise eine Erhöhung der Netzfrequenz im ersten Wechselspannungsnetz 2 aufgrund erhöhter Leistungsabgabe der Windturbinen durch gleichspannungsseitige Absenkung der Spannung des Umrichters 20 und den damit verbundenen erhöhten Leistungsfluss vom ersten in das zweite Wechselspannungsnetz geregelt werden.

In Figur 2 ist die Netzerzeugungsvorrichtung 9 zur Erzeugung der Wechselspannung im ersten Wechselspannungsnetz 2 sowie Spannung- und Frequenzstabilisierung und zur Kompensation von Blindleistung im Wechselspannungsnetz 2 der in der Figur 1 schematisch dargestellten Anlage 1 zum Übertragen elektrischer Leistung schematisch dargestellt.

Die Netzerzeugungsvorrichtung 9 umfasst einen Umrichter 13. Der Umrichter 13 weist drei Wechselspannungsanschlüsse X1, X2, X3 auf, über die die Netzerzeugungsvorrichtung 9 mi den drei Phasen des seeseitigen Wechselspannungsnetzes 2 verbindbar ist. Ferner weist der Umrichter 13 drei Phasenmodule mit in Reihe geschalteten zweipoligen Submodulen 132 auf, wobei jedes Submodul 132 im gezeigten Ausführungsbeispiel einen elektronischen Schalter und eine dazu antiparallel geschaltete Diode umfasst. Ferner weist der Umrichter 13 in jedem Phasenmodul zwei Drosseln 131 auf, zwischen denen jeweils einer der Wechselspannungsanschlüsse X1, X2, X3 angeordnet ist.

Parallel zu den Phasenmodulen ist ein Zwischenkreiskondensator 92 angeordnet. Bei geeigneter Ansteuerung des Umrichters 13 kann mit Hilfe des Kondensators 92 Blindleistung mit den Wechselspannungsnetz 2 ausgetauscht werden. Die Netzerzeugungsvorrichtung 9 umfasst ferner eine Batterie 91, die parallel zum Zwischenkreiskondensator 92 geschaltet ist. Mit Hilfe von zwei Schaltern 93 kann die Batterie 91 von dem Umrichter 13 getrennt werden. Durch geeignete Ansteuerung des Umrichters 13 kann die Batterie dazu dienen, Wirkleistung mit dem Wechselspannungsnetz 2 auszutauschen. Der Kondensator 92 und die Batterie 91 sind an der Gleichspannungsseite des Umrichters 13 angeschlossen. Die Schalter 93 sind beispielsweise elektronische Schalter.

### Bezugszeichenliste

- 1: Anlage zur Übertragung elektrischer Energie
- 2: zweites Wechselspannungsnetz
- 3: erstes Wechselspannungsnetz
- 4: Gleichspannungsverbindung
- 41, 42: Gleichspannungsleitung
- 5: Uferlinie
- 6: Transformator
- 7: Windpark
- 71: Sammelschiene
- 72: Windkraftanlage
- 8: Schalter
- 9: Netzerzeugungsvorrichtung
- 91: Energiespeicherelement
- 92: Zwischenkreiskondensator
- 93: Schalterelement
- 10: ungesteuerter Gleichrichter
- 11, 12: Gleichspannungsschalter
- 13: Umrichter
- 131: Drossel
- 132: Submodul
- 14: Hochseeplattform
- 15: Meßvorrichtung
- 16: Hilfsenergieversorgungseinheit
- 161: Schalter
- X1, X2, X3: Wechselspannungsanschluss

## Patentansprüche

1. Anlage (1) zum Übertragen elektrischer Leistung zwischen einem ersten Wechselspannungsnetz (2) und einem zweiten Wechselspannungsnetz (3) mit einem ungeregelten Gleichrichter (10) und einem an das zweite Wechselspannungsnetz (3) anschließbaren selbstgeführten Umrichter (20), der über eine Gleichspannungsverbindung (4) mit dem ungeregelten Gleichrichter (10) verbunden ist, wobei der ungeregelte Gleichrichter (10) wechselspannungsseitig mit dem ersten Wechselspannungsnetz (2) verbindbar ist,
**gekennzeichnet durch**
eine mit dem ersten Wechselspannungsnetz (2) verbindbare Netzerzeugungsvorrichtung (9), die zur Erzeugung einer Wechselspannung im ersten Wechselspannungsnetz (2) vorgesehen ist, wobei die Netzerzeugungsvorrichtung (9) zum Austausch von Blindleistung und Wirkleistung mit dem ersten Wechselspannungsnetz (2) eingerichtet ist, wobei der selbstgeführte Umrichter dazu eingerichtet ist, durch Änderung einer Spannung an seinem Gleichspannungsanschluss die Netzfrequenz im ersten Wechselspannungsnetz zu regeln, wobei die Netzerzeugungsvorrichtung (9) eine Static-Synchronous-Compensator (STATCOM)-Anlage umfasst, wobei die STATCOM-Anlage als ein modularer Merhstufenumrichter mit verteilten Speicherkondensatoren ausgebildet ist.

2. Anlage (1) nach Anspruch 1,
**dadurch gekennzeichnet, dass** der ungeregelte Gleichrichter (10) ein Diodengleichrichter ist.

3. Anlage (1) nach einem der vorangehenden Ansprüche,
**dadurch gekennzeichnet, dass** die Anlage eine Hochseeplattform umfasst und der ungeregelte Gleichrichter auf der Hochseeplattform (14) angeordnet ist.

4. Anlage (1) nach Anspruch 1 bis 3,
**dadurch gekennzeichnet, dass** die Netzerzeugungsvorrichtung (9) einen rotierenden Phasenschieber umfasst.

5. Anlage (1) nach einem der vorangehenden Ansprüche,
**dadurch gekennzeichnet, dass** eine Hilfsenergieversorgungseinheit (16) zur hilfsweise Bereitstellung von Energie für die Netzerzeugungsvorrichtung (9) vorgesehen ist.

6. Anlage (1) nach einem der vorangehenden Ansprüche,
**dadurch gekennzeichnet, dass** der selbstgeführte Umrichter (20) ein modularer Mehrstufenumrichter ist.

7. Anlage (1) nach einem der vorangehenden Ansprüche,
**dadurch gekennzeichnet, dass** der ungeregelte Gleichrichter (10) eine passive Luftkühlung aufweist.

8. Anlage (1) nach einem der vorhergehenden Ansprüche,
**dadurch gekennzeichnet, dass** die Anlage (1) einen Transformator (6) aufweist, und dass der ungeregelte Gleichrichter (10) über wenigstens den Transformator (6) mit dem ersten Wechselspannungsnetz (2) verbindbar ist.

9. Anlage (1) nach einem der vorhergehenden Ansprüche,
**dadurch gekennzeichnet, dass** die Gleichspannungsverbindung (4) wenigstens eine Gleichspannungsglättungsdrossel aufweist.

## Claims

1. System (1) for transmitting electrical power between a first alternating voltage network (2) and a second alternating voltage network (3), with an unregulated rectifier (10) and a self-commutated converter (20) which is connectable to the second alternating voltage network (3) and connected to the unregulated rectifier (10) via a direct voltage link (4), wherein the unregulated rectifier (10) is connectable to the first alternating voltage network (2) on the alternating voltage side, **characterized by**
a network generation device (9) which is connectable to the first alternating voltage network (2), which is provided for the generation of an alternating voltage in the first alternating voltage network (2), wherein the network generation device (9) is set up for the exchange of reactive power and active power with the first alternating voltage network (2), wherein the self-commutated converter is set up to regulate the network frequency in the first alternating voltage network by changing a voltage at the direct voltage terminal of said self-commutated converter, wherein the network generation device (9) comprises a static-synchronous-compensator (STATCOM) device, wherein the STATCOM device is formed as a modular multi-stage converter with distributed storage capacitors.

2. System (1) according to Claim 1, **characterized in that** the unregulated rectifier (10) is a diode rectifier.

3. System (1) according to one of the preceding claims, **characterized in that** the system comprises an offshore platform and the unregulated rectifier is arranged on the offshore platform (14)

4. System (1) according to one of Claims 1 to 3, **characterized in that** the network generation device (9) comprises a rotating phase shifter.

5. System (1) according to one of the preceding claims, **characterized in that** an auxiliary energy supply unit (16) is provided for the alternative supply of energy to the network generation device (9).

6. System (1) according to one of the preceding claims, **characterized in that** the self-commutated converter (20) is a modular multi-stage converter.

7. System (1) according to one of the preceding claims, **characterized in that** the unregulated rectifier (10) has passive air cooling.

8. System (1) according to one of the preceding claims, **characterized in that** the system (1) has a transformer (6), and **in that** the unregulated rectifier (10) can be connected to the first alternating voltage network (2) via at least the transformer (6).

9. System (1) according to one of the preceding claims, **characterized in that** the direct voltage link (4) has at least one direct voltage smoothing reactor.

## Revendications

1. Installation (1) de transport de puissance électrique entre un premier réseau (2) de tension alternative et un deuxième réseau (3) de tension alternative, comprenant un redresseur (10) non régulé et un onduleur (20) à commutation autonome, qui peut être connecté au deuxième réseau (3) de tension alternative et qui est relié au redresseur (10) non régulé par une liaison (4) à tension continue, le redresseur (10) non régulé pouvant être relié du côté de la tension alternative au premier réseau (2) de tension alternative,
**caractérisée par**
un système (9) de production de réseau, qui peut être relié au premier réseau (2) de tension alternative et qui est prévu pour produire une tension alternative dans le premier réseau (2) de tension alternative, le dispositif (9) de production de réseau étant conçu pour échanger de la puissance réactive et de la puissance active avec le premier réseau (2) de tension alternative, l'onduleur à commutation autonome étant conçu pour, en modifiant une tension sur sa borne de tension continue, réguler la fréquence de réseau dans le premier réseau de tension alternative, le dispositif (9) de production de réseau comprenant une installation Static-Synchronous-Compensator (STATCOM), l'installation STATCOM étant constituée sous la forme d'un onduleur modulaire à plusieurs étages à condensateurs d'accumulation répartis.

2. Installation (1) suivant la revendication 1,
**caractérisée en ce que**
le redresseur (10) non régulé est un redresseur à diodes.

3. Installation (1) suivant l'une des revendications précédentes,
**caractérisée en ce que**
l'installation comprend une plateforme en haute mer et le redresseur non régulé est disposé sur la plateforme (14) en haute mer.

4. Installation (1) suivant la revendication 1 à 3,
**caractérisée en ce que**
le dispositif (9) de production de réseau comprend un déphaseur tournant.

5. Installation (1) suivant l'une des revendications précédentes,
**caractérisée en ce qu'**
il est prévu une unité (16) d'alimentation en énergie auxiliaire pour disposer auxiliairement d'énergie pour le dispositif (9) de production de réseau.

6. Installation (1) suivant l'une des revendications précédentes,
**caractérisée en ce que**
l'onduleur (20) à commutation autonome est un onduleur modulaire à plusieurs étages.

7. Installation (1) suivant l'une des revendications précédentes,
**caractérisée en ce que**
le redresseur (10) non régulé a un refroidissement passif par de l'air.

8. Installation (1) suivant l'une des revendications précédentes,
**caractérisée en ce que**
l'installation (1) a un transformateur (6) et **en ce que** le redresseur (10) non régulé peut être relié au premier réseau (2) de tension alternative par au moins le transformateur (6).

9. Installation (1) suivant l'une des revendications précédentes,
**caractérisée en ce que**
la liaison (4) à tension continue a au moins une bobine de lissage de tension continue.
